# EUROPEAN PATENT APPLICATION

(11) **EP 3 912 777 A1**
(43) Date of publication of application: **24.11.2021**
(21) Application number: 21172772.2
(22) Date of filing: 07.05.2021
(51) Int. Cl.: B27C 1/10, B23B 31/107

(54) **PLANER ATTACHMENT FOR A POWER TOOL**

(30) Priority: 19.05.2020 US 202016877833
(71) Applicant: Techtronic Cordless GP, Anderson, SC 29621 (US)
(72) Inventor: EVATT, Thomas, Six Mile, 29682 (US); DAHILL, Drew A., Pendleton, 29670 (US); TENNANT, Christopher Scott, Clemson, 29631 (US)
(74) Representative: Parker, Andrew James

(57) **Abstract**

A planer attachment for use with a power tool. The planer attachment includes a main body that has a bore extending along a longitudinal axis and an opening in communication with the bore, a bit at least partially positioned within the bore and being rotatable relative to the main body, and a retaining member supported by the main body. An end of the bit extends from the main body, and a cutting edge of the bit extends through the opening such that the cutting edge of the bit is exposed for use on a surface of a workpiece. The retaining member inhibits axial movement of the bit relative to the bore.

## Description

### FIELD

The invention relates to a planer attachment for a power tool (e.g., rotary power tool).

### BACKGROUND

Planers are tools that can be used for thinning or smoothing a surface of a workpiece made of, e.g., wood.

### SUMMARY

In a first aspect, a planer attachment for use with a power tool is provided. The planer attachment includes a main body that has a bore extending along a longitudinal axis and an opening in communication with the bore, a bit at least partially positioned within the bore, and a retaining member supported by the main body. The bit is rotatable relative to the main body. An end of the bit extends from the main body, and a cutting edge of the bit extends through the opening such that the cutting edge of the bit is exposed for use on a surface of a workpiece. The retaining member inhibits axial movement of the bit relative to the bore.

In one embodiment of the first aspect, the main body has a wall that is oriented perpendicular to the longitudinal axis. The wall may be positionable against a side of the workpiece while the bit engages the surface of the workpiece.

In one embodiment of the first aspect, the retaining member is removable from the main body to permit removal of the bit from the main body.

In one embodiment of the first aspect, the main body includes a through-hole in communication with the bore and the retaining member includes a projection. The projection may be received within the through-hole to secure the retaining member to the main body. The projection may be depressible to remove the retaining member from the main body.

In one embodiment of the first aspect, the planer attachment further comprises a bearing positioned within the bore. The bit may be rotatably supported within the bore for rotation with the bearing.

In one embodiment of the first aspect, the planer attachment further comprises a pair of bearings positioned within the bore on opposite sides of the opening. The bit may be rotatably supported within the bore by the pair of bearings and the retaining member may be one of a pair of retaining members removably positioned within the bore. One of the pair of retaining members is adjacent one of the pair of bearings and the other of the pair of retaining members is adjacent the other of the pair of bearings. The pair of retaining members may axially restrain the bit within the bore.

The main body may have a wall that is oriented perpendicular to the longitudinal axis. The wall may be positionable against a side of the workpiece while the bit engages the surface of the workpiece.

In one embodiment of the first aspect, the main body includes a bit-receiving portion through which the bore extends, a workpiece-engaging portion extending from the bit-receiving portion, and a wall extending from the bit-receiving portion and the workpiece-engaging portion. The wall may be oriented perpendicular to the longitudinal axis. The wall may be positionable against a side of the workpiece. The bit-receiving portion and the workpiece-engaging portion may be positionable against the surface of the workpiece.

In a second aspect, a planer attachment for use with a power tool is provided. The planer attachment includes a main body having a bore extending along a longitudinal axis and an opening in communication with the bore, and the main body defining a first wall that is oriented generally perpendicular to the longitudinal axis. The planer attachment includes a bit at least partially positioned within the bore. The bit is rotatable relative to the main body (or bore). The bit includes a cutting edge extending through the opening and is configured to engage a surface of a workpiece. The planer attachment further includes an adjustable member coupled to the main body and having a second wall that is spaced apart from and oriented parallel to the first wall, and the adjustable member is movable relative to the main body to change a distance between the first wall and the second wall.

In one embodiment of the second aspect, the planer attachment further comprises a locking mechanism that locks the adjustable member relative to the main body.

In one embodiment of the second aspect, the locking mechanism includes a detent extending from one of the main body or the adjustable member and a projection extending from the other of the main body and the adjustable member. The projection may be engageable with the detent to lock the adjustable member relative to the main body.

In one embodiment of the second aspect, the first wall is configured to be positioned on a first side of the workpiece, the second wall is configured to be positioned on a second side of the workpiece, and the bit is configured to engage the surface. The surface may be positioned between the first side and the second side of the workpiece.

In one embodiment of the second aspect, when the adjustable member is in a first position, the distance between the first wall and the second wall measures 34.9mm (1-3/8 inches), and when the adjustable member is in a second position, the distance between the first wall and the second wall measures 44.5mm (1-3/4 inches).

In one embodiment of the second aspect, the main body includes a bit-receiving portion and a workpiece-engaging portion extending from the bit-receiving portion. The bore may extend through the bit-receiving portion, the first wall may extend from the bit-receiving portion and the workpiece-engaging portion.

In one embodiment of the second aspect, the adjustable member includes a coupling portion that is movably attached to the main body. The second wall may extend from and may be oriented perpendicular to the coupling portion. The coupling portion may have a guide surface with an arcuate portion supported by and movable relative to the bit-receiving portion and a planar portion supported by and movable relative to the workpiece-engaging portion.

In one embodiment of the second aspect, the bit-receiving portion includes a projection extending therefrom and the coupling portion includes an actuator having a first through-hole and a second through-hole. The actuator may be movable to position the projection in one of the first through-hole and the second through-hole to lock the adjustable member relative to the main body.

In one embodiment of the second aspect, the adjustable member is slideable in a direction parallel to the longitudinal axis of the main body to adjust the distance between the first wall and the second wall.

In one embodiment of the second aspect, the adjustable member includes a handle.

In a third aspect, a planer attachment for use with a power tool is provided. The planer attachment includes a main body having a bore extending along a longitudinal axis and an opening in communication with the bore, a bit assembly supported by the main body, and an adjustable member coupled to the main body and having a wall. The adjustable member is movable relative to the main body to position the wall against a side of the workpiece. The bit assembly includes a bearing positioned within the bore. A bit at least partially positioned within the bore and being rotatable relative to the main body. The bit includes a cutting edge extending through the opening and is configured to engage a surface of a workpiece. A retaining member is removably positioned within the bore, and the retaining member is positioned adjacent the bearing. The retaining member prevents axial movement of the bit within the bore.

In one embodiment of the third aspect, the adjustable member is slideable along the longitudinal axis of the main body to position the wall against the side of the workpiece.

In one embodiment of the third aspect, the adjustable member includes a locking mechanism that locks the adjustable member relative to the main body.

In one embodiment of the third aspect, the retaining member is removable from the main body such that the bit is removable from the main body.

In a fourth aspect of the invention, there is provided a power tool comprising a planer attachment of the first aspect, the second aspect, or the third aspect.

Other features and aspects of the invention will become apparent by consideration of the detailed description and accompanying drawings. Any feature(s) described herein in relation to one aspect or embodiment may be combined with any other feature(s) described herein in relation to any other aspect or embodiment as appropriate and applicable.

### BRIEF DESCRIPTION OF THE DRAWINGS

Embodiments of the invention will now be described, by way of example, with reference to the accompanying drawings in which:
FIG. 1 is a side view of a power tool.
FIG. 2 a perspective view of a planer attachment for use with the power tool of FIG. 1 according to one embodiment, the planer attachment including a main body, a bit assembly, and an adjustable fence.
FIG. 3 is another perspective view of the planer attachment of FIG. 2.
FIG. 4 is a perspective view of the planer attachment of FIG. 2 with the adjustable fence removed.
FIG. 5 is another perspective view of the planer attachment of FIG. 2 with the adjustable fence removed.
FIG. 6 is a perspective view of the bit assembly of FIG. 2.
FIG. 7 is a cross-sectional view of the planer attachment viewed along section 7--7 of FIG. 3.
FIG. 8 is a cross-section view of the planer attachment viewed along section 8--8 of FIG. 2.
FIG. 9 is a perspective view of a planer attachment according to another embodiment.
FIG. 10 is another perspective view of the planer attachment of FIG. 9.
FIG. 11 is another perspective view of the planer attachment of FIG. 9.

### DETAILED DESCRIPTION

Before any independent embodiments of the invention are explained in detail, it is to be understood that the invention is not limited in its application to the details of construction and the arrangement of components set forth in the following description or illustrated in the following drawings. The invention is capable of other independent embodiments and of being practiced or of being carried out in various ways. Also, it is to be understood that the phraseology and terminology used herein is for the purpose of description and should not be regarded as limiting. Use of "including" and "comprising" and variations thereof as used herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings.

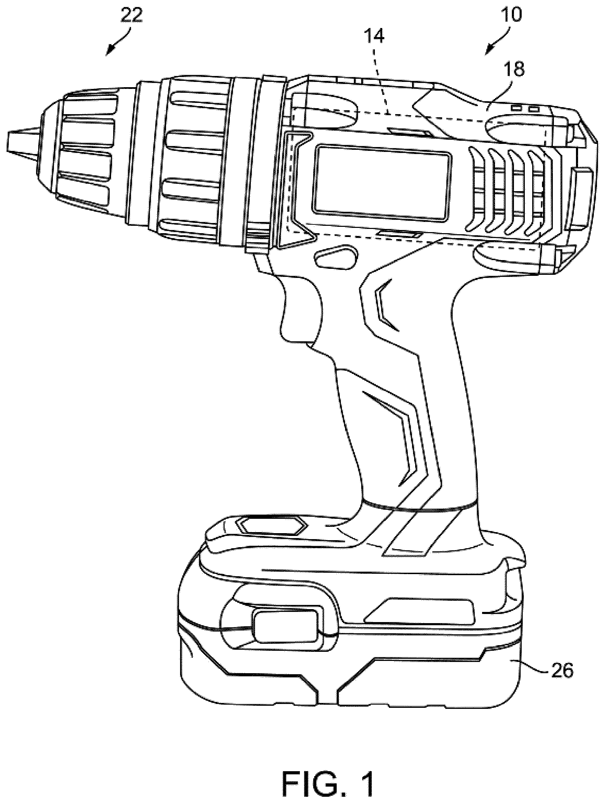

FIG. 1 illustrates a power tool 10, according to one embodiment. The tool 10 including an electric motor 14 (shown schematically in broken lines), a housing 18 in which the electric motor is supported, and a rotational output 22 operable to perform work on a workpiece. In the illustrated embodiment, the power tool 10 is a drill including a chuck operable to receive a bit (e.g., a drill bit, a screw bit, and/or the like) to perform work on a workpiece (e.g., a door, a wooden workpiece, a tile workpiece, and/or the like). Alternatively, the power tool 10 may be configured as any of a number of different tools having a rotational output (e.g., a grinder, a router, etc.).

With continued reference to FIG. 1, the housing 18 supports and/or retains the electric motor 14 and a battery 26 electrically connected to the motor 14. The battery 26 may be configured having any of a number of different voltages (e.g., 4 volts, 12 volts, 18 volts, and/or the like) depending upon the range of applications of the power tool 10 and may utilize any of a number of different chemistries (e.g., lithium-ion, nickel-cadmium, and/or the like). The battery 26 is also removable from the housing 18 for charging by a separate battery charger. In other embodiments of the power tool 10 (not shown), the battery 26 may be enclosed within the housing 18 and non-removable from the power tool 10. In such an embodiment, the power tool 10 may also incorporate a battery charging circuit to charge the internal battery. Alternatively, the power tool 10 may include a power cord (not shown) to electrically connect the motor 14 to a remote power source (e.g., household line alternating current available from a power outlet) rather than incorporating an onboard direct current power source (i.e., the battery 26). The battery 26 may also be interchangeable with a variety of other power tools (e.g., saws, flashlights, drivers, and/or the like) to supply power to the power tools.

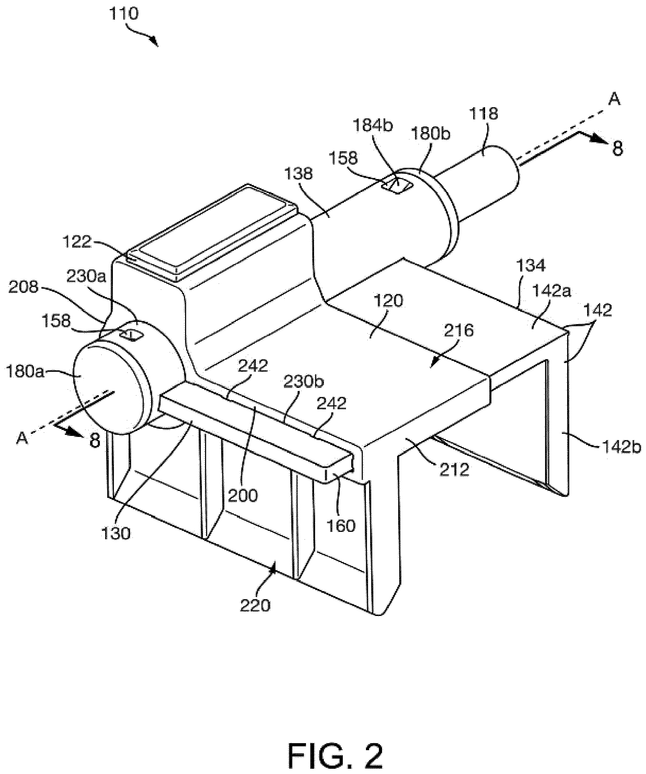

FIGS. 2-8 illustrate a planer attachment 110 that is coupleable to the power tool 10. The planer attachment 110 includes a housing or main body 114, a bit 118 rotatably supported within the main body 114, and an adjustable member or fence 120 having a gripping portion or handle 122 for a user to grasp during a planing operation.

With respect to FIGS. 2-5, the main body 114 may include a first end 130 and a second end 134. Further, the main body 114 may include a bit-receiving portion 138 and a workpiece-supporting or workpiece-receiving portion 142 that extends from the bit-receiving portion 138.

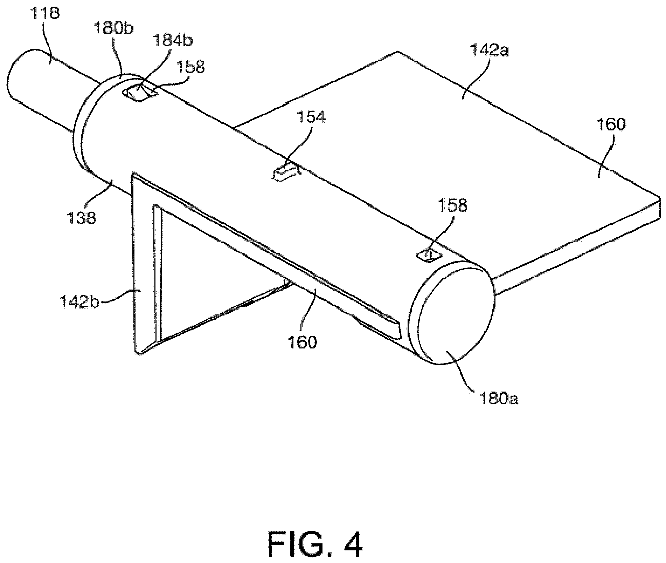

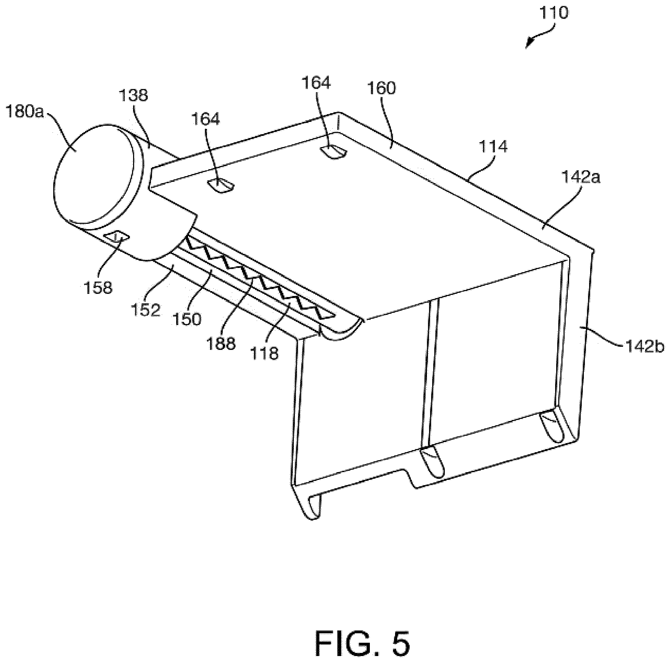

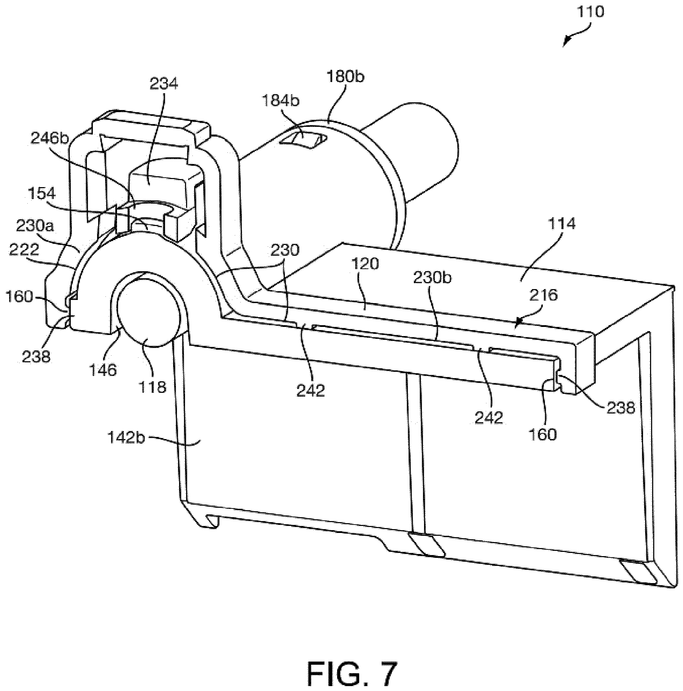

The bit-receiving portion 138 may include a bore or aperture 146 (FIG. 7) disposed therethrough that extends between the first and second ends 130, 134, and defines a longitudinal axis A (FIG. 2). An opening 150 (FIG. 5) may extend through a wall 152 of the bit-receiving portion 138 and intersect the aperture 146 such that the opening 150 is in communication with the aperture 146. A projection 154 (FIG. 4) may extend outwardly from the bit-receiving portion 138, and in the illustrated embodiment, the opening 150 and the projection 154 may be positioned on opposite sides of the bit-receiving portion 138. Opposite ends of the bit-receiving portion 138 may include a pair of through-holes 158 extending through the wall of the bit-receiving portion 138. In the illustrated embodiment, the through-holes 158 are positioned on opposite sides of the bit-receiving portion 138.

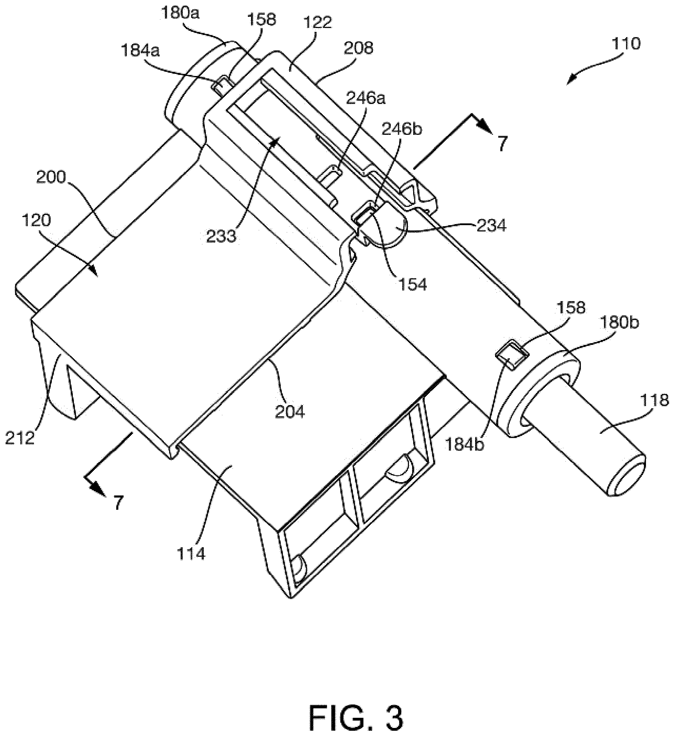

With respect to FIGS. 3-4, the workpiece-receiving portion 142 may include a first portion 142a (e.g., a workpiece-engaging portion) that extends outwardly from the bit-receiving portion 138 and is generally parallel to the longitudinal axis A (FIG. 2). A second portion 142b (e.g., a first wall) of the workpiece-receiving portion 142 may be oriented perpendicular to the first portion 142a and generally perpendicular (e.g., within about +/- 10°) to the longitudinal axis A. In other words, the workpiece-receiving portion 142 may include and/or be formed as an L-shape. The majority of the workpiece-receiving portion 142 may be positioned on one side of the bit-receiving portion 138. That is, the workpiece-receiving portion 142 may be wider on a first side of the bit-receiving portion 138 than on a second side of the bit-receiving portion 138. In further embodiments, the bit-receiving portion may be positioned in other locations relative to the workpiece-receiving portion 142, for example, the bit-receiving portion may be substantially centered on the workpiece-receiving portion 142, skewed to one side or the other of the workpiece-receiving portion 142, and/or the like.

Referring to FIG. 5, the workpiece-receiving portion 142 may include guide surfaces 160 that extend along opposite edges thereof, and/or projections 164 that extend from a bottom surface of the workpiece-receiving portion 142. In the illustrated embodiment, the guide surfaces 160 extend along opposite edges of the first portion 142a of the workpiece-receiving portion 142.

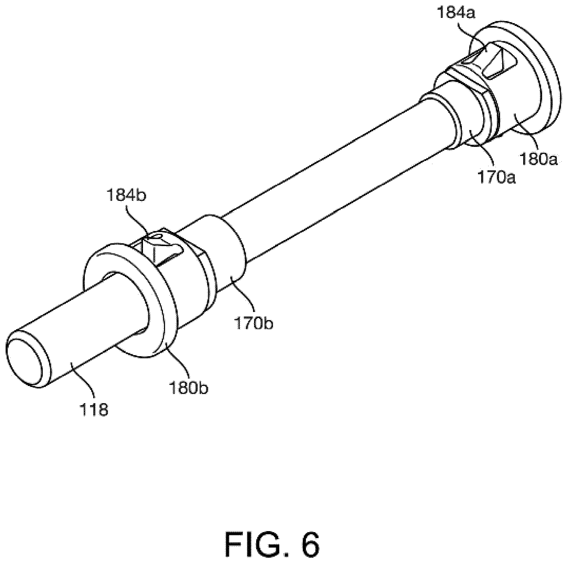

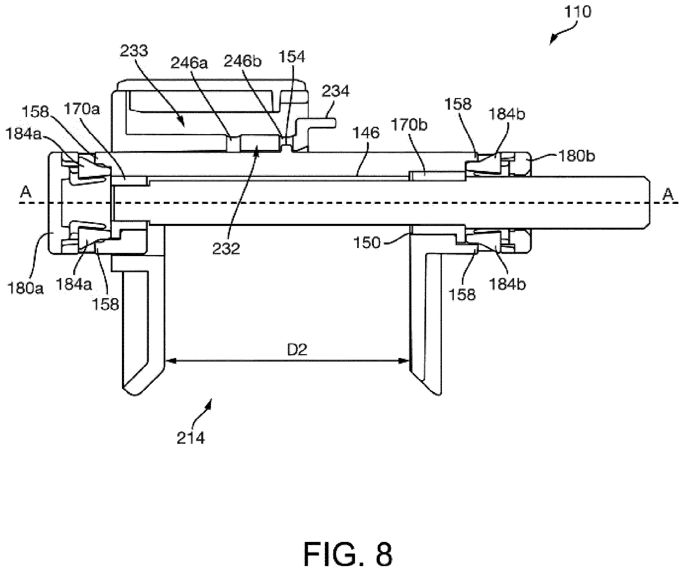

As shown in FIG. 6, the bit 118 is part of a bit assembly that may include a first bearing 170a, a second bearing 170b, a first retaining member or a first plug 180a, and a second retaining member or a second plug 180b, each of which are positioned within the aperture 146 of the bit-receiving portion 138. As shown in FIG. 8, the bit 118 may be supported within the main body 114 for rotation with the first and second bearings 170a, 170b disposed on opposite sides of the opening 150 and at opposite ends of the bit-receiving portion 138. The bearings 170a, 170b may be supported by and/or between the main body 114 and the respective first and second plugs 180a, 180b.

The bit 118 may be retained within the main body 114 by the first and second plugs 180a, 180b. That is, the first and second plugs 180a, 180b may prevent axial movement of the bit 118. In particular, the first and second plugs 180a, 180b may include projections 184a, 184b on a side thereof that are configured to extend through the respective pairs of through-holes 158 in the bit-receiving portion 138. The projections 184a, 184b may be depressible to allow the respective first and second plugs 180a, 180b to be removed, thereby allowing the bit 118 and the first and the second bearings 170a, 170b to be removed from the bit-receiving portion 138. In other or additional embodiments, the first and second plugs 180a, 180b may be removably coupled to the main body 114 in other ways such as a threaded connection, and/or the like.

As shown in FIGS. 5, 7, and 8, a portion of the bit 118 may extend through the opening 150 in the main body 114. Thus, when the planer attachment 110 is coupled to a power tool 10, a cutting edge 188 of the bit 118 is exposed for use on a working surface of the workpiece (e.g., for planing the working surface of the workpiece, and/or the like). As shown, the bit 118 may not extend into the first plug 180a, but may extend through the second plug 180b for receipt by the power tool 10. Moreover, the bit 118 may not extend from the first end 130 of the main body 114, but may extend from the second end 134 of the main body 114. The bit 118 is attachable to the power tool 10. In particular, the bit 118 may be received within the chuck of a power tool 10, such as a drill driver, and the bit 118 may be rotatably driven by the chuck of the power tool 10.

With respect to FIGS. 2-3 and 7-8, the adjustable fence 120 may include a first end 200, a second end 204, a first side 208, and a second side 212. The fence 120 may be movable or slideable relative to the main body 114 parallel to or along the longitudinal axis A. The fence 120 may be slidably attached to the main body 114 of the planer attachment 110, and further include a coupling portion 216 for attaching the fence 120 to the main body 114 and a workpiece-facing portion 220 (e.g., a second wall) may be oriented generally perpendicular relative to the coupling portion 216 such that the fence 120 has an L-shape. When assembled, the workpiece-facing portion 220 may be oriented opposite to and generally parallel with the second portion 142b of the main body 114 to define a gap 214 (FIG. 8) therebetween. The workpiece is positionable in the gap 214 between the working piece-facing portion 220 and the second portion 142b of the main body 114. As will be discussed in greater detail below, the workpiece-facing portion 220 may be movable relative to the second portion 142b of the main body 114 to accommodate workpieces having different widths.

The coupling portion 216 may include an aperture 222, a guide surface 230 (FIG. 7), and a locking mechanism 232 (FIG. 8) supported by and extending from the guide surface 230. The aperture 222 receives the bit-receiving portion 138 and the first portion 142a of the workpiece-receiving portion 142. The guide surface 230 defines at least a portion of the aperture. The guide surface 230 may include a first, arcuate portion 230a that overlies the bit-receiving portion 138. A second, planar portion 230b may extend from the arcuate portion 230a and may overlay the workpiece-receiving portion 142 (and specifically the workpiece-engaging portion) of the main body 114. Guide rails 238 (FIG. 7) may be positioned on opposite sides 208, 212 of the coupling portion 216 and slidingly engage the guide surfaces 160 of the main body 114. Additionally, guide rails 242 may also be positioned along a bottom surface of the guide surface 230 and slidingly engage a top surface of the workpiece-receiving portion 142 of the main body 114. Moreover, the projections 164 that extend from the workpiece-receiving portion 142 may slidably engage coupling portion 216. The guide rails 238, 242, the guide surfaces 160, and the projections 164 may help stabilize the adjustable fence 120 so that the adjustable fence 120 moves or slides smoothly relative to the main body 114. In the embodiment illustrated in FIGS. 2-8, the gripping portion 122 extends from and is aligned with and supported by the arcuate portion 230a of the guide surface 230. Moreover, as shown, the gripping portion 122 may define a cavity 233 in which the locking mechanism 232 may be at least partially positioned.

The locking mechanism 232 may include an actuator 234 and a pair of through-holes 246a, 246b (e.g., a plurality of through-holes 246a, 246b or a first through-hole 246a and a second through-hole 246b) for engaging the projection 154 on the bit-receiving portion 138. The actuator 234 may be configured to move to selectively position the projection 154 of the bit-receiving portion 138 in one of the through-holes 246a, 246b. When the projection 154 is received within one of the through-holes 246a, 246b, the fence 120 may be locked in place relative to the main body 114. More specifically, when the projection 154 is received in one of the through-holes 246a, a first distance (not shown) may be defined between the second portion 142b of the workpiece-receiving portion 142 and the workpiece-facing portion 220 of the adjustable fence 120. Further, when the projection 154 is received the other of the through-holes 246b, a second distance D2 may be defined between the second portion 142b of the workpiece-receiving portion 142 and the workpiece-facing portion 220 of adjustable fence 120. That is, the second distance D2 may be increased or decreased by way of moving (e.g., sliding) the adjustable fence 120 to a desired location.

In the illustrated embodiment, the first distance (not shown) may be sized to accommodate a workpiece (e.g., a door) having a width of 34.9mm (1-3/8 inches) and the second distance D2 may be sized to accommodate a workpiece (e.g., a door) having a width of 44.5mm (1-3/4 inches). Although only two through-holes corresponding to two door widths are shown in the illustrated embodiment, in other or additional embodiments, the actuator may have additional through-holes corresponding to other door widths. Lifting (e.g., vertically actuating) the actuator 234 may move the through-holes 246a, 246b away from the projection 154 to unlock the fence 120 and allow movement between the fence 120 and the main body 114. Accordingly, lifting the actuator 234 may allow the fence 120 to slide relative to the main body 114 to selectively position the projection 154 in one of the through-holes 246a, 246b to achieve one of the respective first or second distances.

In use, the second portion 142b of the workpiece-receiving portion 142 of the main body 114 may be positioned on one side (e.g., a first side) of the workpiece and the workpiece-facing portion 220 of the adjustable fence 120 may be positioned on the opposite side (e.g., a second side) of the workpiece. The working surface is positioned between opposite sides of the workpiece. The adjustable fence 120 may be movable to adjust the distance between the second portion 142b of the workpiece-receiving portion 142 and/or the workpiece-facing portion 220 to accommodate the thickness of the workpiece (e.g., 44.5mm (1-3/4 inches) thick, 34.9mm (1-3/8 inches) thick, and/or a different thickness). Once positioned, the second portion 142b of the workpiece-receiving portion 142 and/or the workpiece-facing portion 220 of the main body 114 and the adjustable fence 120 may abut opposite sides of the workpiece such that the workpiece-engaging portion engages the working surface of the workpiece during an operation in which the bit 118 (which extends through the opening 150) cuts into the working surface and removes or planes the working surface of the workpiece.

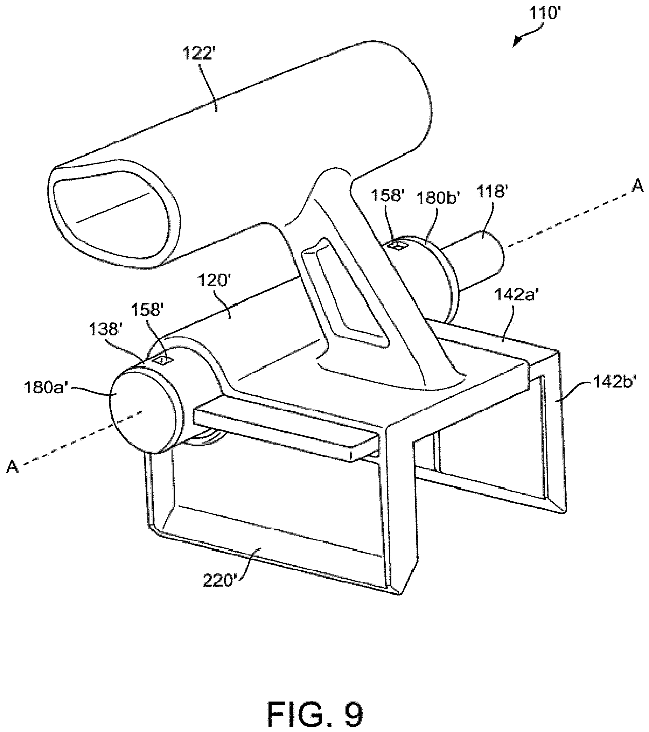

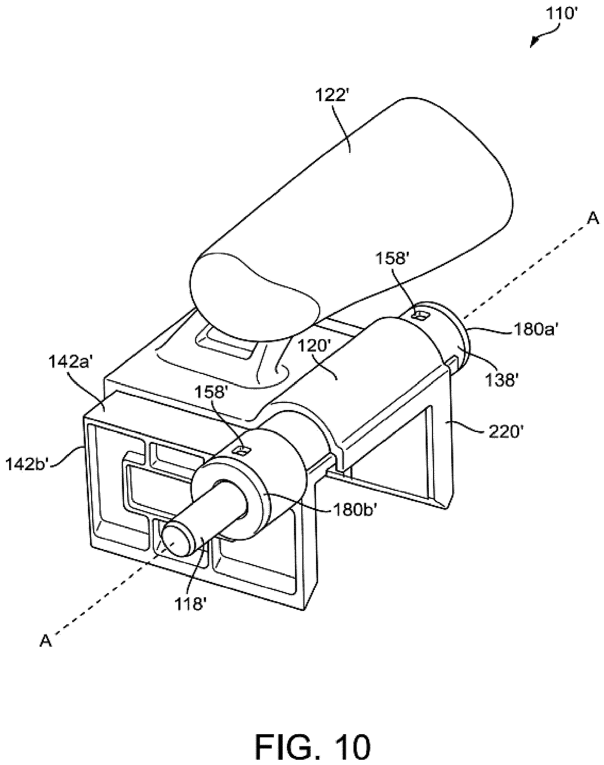

FIGS. 9-11 illustrate a planer attachment 110' according to another embodiment. The planer attachment 110' of FIGS. 9-11 is similar to the planer attachment 110 of FIGS. 2-8; therefore, similar structures will be identified by similar reference numerals and are denoted with a prime or apostrophe.

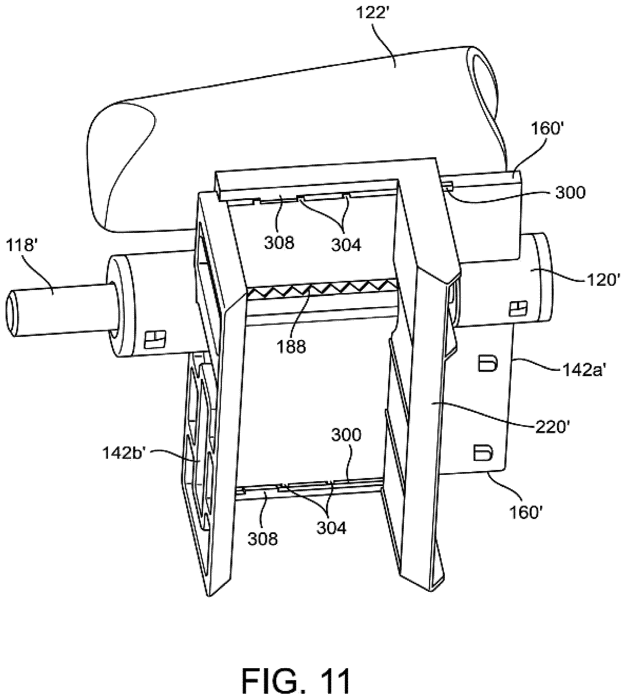

Referring to FIG. 11, the workpiece-receiving portion 142' may include channels or grooves 300 that are positioned along and parallel with the guide surfaces 160' that extend along opposite edges thereof. In the illustrated embodiment, the grooves 300 extend along opposite edges of the workpiece-receiving portion 142'. Moreover, one or more detents 304 (or projections) are positioned in the grooves 300. That is, the detents 304 extend from a surface of the groove. In the illustrated embodiment, each of the grooves 300 includes two detents 304. In other embodiments, each of the grooves 300 may have more or fewer detents 304. In still other embodiments, only one of the grooves 300 may include detents 304.

As shown in FIG. 11, the gripping portion 122' of the fence 120' extends from and is supported by the planar portion 230b' of the guide surface 230'. In the illustrated embodiment, at least a portion of the gripping portion 122' is oriented parallel to the longitudinal axis A. Moreover, the adjustable fence 120' includes a projection 308 that extends from each guide rails 238'. The projections 308 are configured to engage the corresponding detent 304 of the workpiece-receiving portion 142'. The projection 308 and detent 304 forms a locking mechanism between the adjustable fence 120' and the main body 114'. Accordingly, the adjustable fence 120' may be locked relative to the workpiece-receiving portion 142' by engagement of the projection 308 with a corresponding detent 304.

Generally, when the projection 308 is positioned on a first side of the respective detent 304, the second portion 142b' of the workpiece-receiving portion 142' and the workpiece-facing portion 220' of the adjustable fence 120' are spaced apart from one another by the first distance (e.g., 34.9mm (1-3/8 inches)), and when the projection 308 is positioned in the second, opposite side of the respective detent 304 the second portion 142b' of the workpiece-receiving portion 142' and the workpiece-facing portion 220' of the adjustable fence 120' are spaced apart from one another by the second distance (e.g., 44.5mm (1-3/4 inches)). More specifically, when the projection 308 is positioned between a first end of the groove 300 and a first respective detent 304, the second portion 142b' of the workpiece-receiving portion 142' and the workpiece-facing portion 220' of the adjustable fence 120' are spaced apart from one another by the first distance. When the projection 308 is positioned between a second respective detent and a second side of the groove 300, the second portion 142b' of the workpiece-receiving portion 142' and the workpiece-facing portion 220' of the adjustable fence 120' are spaced apart from one another by the second distance. To move the fence 120' relative the main body 114', and therefore change the distance between the second portion 142b' of the workpiece-receiving portion 142' and the workpiece-facing portion 220' of the adjustable fence 120', the user may exert a force parallel to the longitudinal axis A to cause the projection 308 to move past the respective detent 304.

Although the invention has been described in detail with reference to certain embodiments, variations and modifications exist within the scope of one or more independent aspects of the invention, as described. Various features are set forth in the claims.

## Claims

1. A planer attachment for use with a power tool, the planer attachment comprising:
a main body having a bore extending along a longitudinal axis and an opening in communication with the bore;
a bit at least partially positioned within the bore, the bit being rotatable relative to the main body, an end of the bit extending from the main body, and a cutting edge of the bit extending through the opening such that the cutting edge of the bit is exposed for use on a surface of a workpiece; and
a retaining member supported by the main body, the retaining member inhibiting axial movement of the bit relative to the bore.

2. The planer attachment of claim 1, wherein the retaining member is removable from the main body to permit removal of the bit from the main body.

3. The planer attachment of claim 1 or 2, wherein the main body includes a through-hole in communication with the bore and wherein the retaining member includes a projection, the projection being received within the through-hole to secure the retaining member to the main body, the projection being depressible to remove the retaining member from the main body.

4. The planer attachment of any one of claims 1 to 3, further comprising:
a bearing positioned within the bore, the bit rotatably supported within the bore for rotation with the bearing; or
a pair of bearings positioned within the bore on opposite sides of the opening, wherein the bit is rotatably supported within the bore by the pair of bearings and wherein the retaining member is one of a pair of retaining members removably positioned within the bore, one of the pair of retaining members adjacent one of the pair of bearings and the other of the pair of retaining members adjacent the other of the pair of bearings, the pair of retaining members axially restraining the bit within the bore.

5. The planer attachment of any one of claims 1 to 4, wherein the main body has a wall that is oriented perpendicular to the longitudinal axis, the wall being positionable against a side of the workpiece while the bit engages the surface of the workpiece.

6. The planer attachment of any one of claims 1 to 4, wherein the main body includes a bit-receiving portion through which the bore extends, a workpiece-engaging portion extending from the bit-receiving portion, and a wall extending from the bit-receiving portion and the workpiece-engaging portion, the wall oriented perpendicular to the longitudinal axis, the wall being positionable against a side of the workpiece, the bit-receiving portion and the workpiece-engaging portion being positionable against the surface of the workpiece.

7. A planer attachment for use with a power tool, the planer attachment comprising:
a main body having a bore extending along a longitudinal axis and an opening in communication with the bore, the main body defining a first wall that is oriented perpendicular to the longitudinal axis;
a bit at least partially positioned within the bore, the bit being rotatable relative to the main body, and the bit including a cutting edge extending through the opening and configured to engage a surface of a workpiece; and
an adjustable member coupled to the main body and having a second wall that is spaced apart from and oriented parallel to the first wall, the adjustable member being movable relative to the main body to change a distance between the first wall and the second wall.

8. The planer attachment of claim 7, further comprising a locking mechanism that locks the adjustable member relative to the main body.

9. The planer attachment of claim 8, wherein the locking mechanism includes a detent extending from one of the main body or the adjustable member and a projection extending from the other of the main body and the adjustable member, the projection engageable with the detent to lock the adjustable member relative to the main body.

10. The planer attachment of any one of claims 7 to 9,
wherein the first wall is configured to be positioned on a first side of the workpiece, the second wall is configured to be positioned on a second side of the workpiece, and the bit is configured to engage the surface, the surface being positioned between the first side and the second side of the workpiece; and/or
wherein when the adjustable member is in a first position, the distance between the first wall and the second wall measures 34.9mm (1-3/8 inches), and when the adjustable member is in a second position, the distance between the first wall and the second wall measures 44.5mm (1-3/4 inches).

11. The planer attachment of any one of claims 7 to 10, wherein:
the main body includes a bit-receiving portion and a workpiece-engaging portion extending from the bit-receiving portion, the bore extending through the bit-receiving portion, the first wall extending from the bit-receiving portion and the workpiece-engaging portion,
the adjustable member includes a coupling portion that is movably attached to the main body, the second wall extending from and being oriented perpendicular to the coupling portion, the coupling portion having a guide surface with an arcuate portion supported by and movable relative to the bit-receiving portion and a planar portion being supported by and movable relative to the workpiece-engaging portion.

12. The planer attachment of claim 11, wherein the bit-receiving portion includes a projection extending therefrom and the coupling portion includes an actuator having a first through-hole and a second through-hole, the actuator being movable to position the projection in one of the first through-hole and the second through-hole to lock the adjustable member relative to the main body.

13. The planer attachment of any one of claims 7 to 12,
wherein the adjustable member is slideable in a direction parallel to the longitudinal axis of the main body to adjust the distance between the first wall and the second wall; and/or
wherein the adjustable member includes a handle.

14. A planer attachment for use with a power tool, the planer attachment comprising:
a main body having a bore extending along a longitudinal axis and an opening in communication with the bore;
a bit assembly supported by the main body, the bit assembly including
a bearing positioned within the bore,
a bit at least partially positioned within the bore, the bit being rotatable relative to the main body, and the bit including a cutting edge extending through the opening and configured to engage a surface of a workpiece,
a retaining member removably positioned within the bore, the retaining member positioned adjacent the bearing, the retaining member preventing axial movement of the bit within the bore; and
an adjustable member coupled to the main body and having a wall, the adjustable member being movable relative to the main body to position the wall against a side of the workpiece.

15. The planer attachment of claim 14,
wherein the adjustable member is slideable along the longitudinal axis of the main body to position the wall against the side of the workpiece; and/or
wherein the adjustable member includes a locking mechanism that locks the adjustable member relative to the main body; and/or
wherein the retaining member is removable from the main body such that the bit is removable from the main body.
